# EUROPEAN PATENT APPLICATION

(11) **EP 3 438 464 A1**
(43) Date of publication of application: **06.02.2019**
(21) Application number: 16896985.5
(22) Date of filing: 31.03.2016
(51) Int. Cl.: F04D 29/62

(54) **METHOD FOR PRODUCING CASING FOR RADIAL COMPRESSOR, AND METHOD FOR PRODUCING RADIAL COMPRESSOR**

(71) Applicant: Mitsubishi Heavy Industries Engine & Turbocharger, Ltd., Sagamihara-shi, Kanagawa 252-5293 (JP)
(72) Inventor: WATANABE, Yasunori, Tokyo 108-8215 (JP); OKABE, Ryoji, Tokyo 108-8215 (JP); IWAKIRI, Kenichiro, Tokyo 108-8215 (JP); KANZAKA, Tadashi, Tokyo 108-8215 (JP); YAMASHITA, Takahiro, Tokyo 100-6606 (JP); FUJISAWA, Kazutake, Tokyo 100-6606 (JP)
(74) Representative: Mader, Joachim
(86) International application number: PCT/JP2016/061643
(87) International publication number: WO 2017/168768

(57) **Abstract**

The present invention provides a method for producing a casing (10) for a radial compressor (1), the method including an intake-side casing molding process (S4a) of molding an intake portion (11) and a first main body portion (22) of a scroll portion (12) by integral molding of resin; an impeller-side casing molding process (S4b) of integrally molding a second main body portion (23) of the scroll portion (12) and a diffuser portion (24) by a resin molding metal mold (100) used in the intake-side casing molding process (S4a); a die sliding process (S5) of combining the intake portion (11) and the first main body portion (22) which have been integrally molded, and the second main body portion (23) and the diffuser portion (24) which have been integrally molded, by slide of the resin molding metal mold (100); and a secondary molding process of joining the intake portion (11) and the first main body portion (22), and the second main body portion and the diffuser portion combined with each other by resin.

## Description

### [Technical Field]

The present invention relates to a method for producing a casing for a radial compressor and a method for producing a radial compressor.

### [Background Art]

A radial compressor is known as a kind of compressor. In a radial compressor, gas flowing out from an impeller is introduced into a scroll portion having a flow path formed in a spiral shape, is guided in a circumferential direction, and thereafter is discharged. On an inner circumferential side of the scroll portion, a diffuser portion disposed to face the impeller to guide the gas from the impeller to the flow path of the scroll portion is provided.

Here, as in the radial compressors described in Patent Documents 1 and 2, for example, in some cases, a casing for a radial compressor used in a turbocharger of an automobile is made of resin for weight reduction or the like.

### [Citation List]

### [Patent Document]

[Patent Document 1] Translation of PCT International Application No. 2011-503439
[Patent Document 2] Translation of PCT International Application No. 2012-524860

### [Summary of Invention]

### [Technical Problem]

The resin casing described above is manufactured by injecting a resin into a resin molding metal mold. However, when a diffuser part is incorporated into a scroll part after molding, it may be difficult to align the positional relationship between the diffuser part and the scroll part. If the positional relationship between the diffuser part and the scroll part deviates from the designed positional relationship, the tip clearance between the diffuser part and the impeller may differ from a designed value. As a result, there is a problem that the performance of the compressor may deteriorate.

Accordingly, the present invention provides a method for producing a casing for a radial compressor and a method for producing a radial compressor in which positional deviation of the diffuser part is able to be avoided and in which performance deterioration is able to be curbed.

### [Solution to Problem]

A method for producing a casing for a radial compressor according to a first aspect of the present invention includes an intake-side casing molding process in which an intake portion and a first main body portion are molded by integrally molding a resin, the intake portion having a cylindrical shape extending in a direction of a rotational axis of an impeller and opening in the direction of the rotational axis for introducing gas into the impeller, the first main body portion having a discharge port which is disposed on an outer circumferential side of the impeller and the intake portion, extends in the circumferential direction and opens in the circumferential direction, and forming an inner surface of a scroll flow path through which the gas flows from the impeller toward the discharge port on the intake portion side in the direction of the rotational axis; an impeller-side casing molding process in which a second main body portion and a diffuser portion are molded by integrally molding a resin using the resin molding metal mold used in the intake-side casing molding process, the second main body portion forming an inner surface of the scroll flow path on the impeller side in the direction of the rotational axis, the diffuser portion being disposed at a position on a radially inner side of the second main body portion and sandwiched between the intake portion and the impeller in the direction of the rotational axis, and forming an inner surface of the scroll flow path on a radially inner side and guiding the gas from the impeller into the scroll flow path; a die sliding process of combining the intake portion and the first main body portion which have been integrally molded, and the second main body portion and the diffuser portion which have been integrally molded, by sliding the resin molding metal mold; and a joining process in which the intake portion and the first main body portion, and the second main body portion and the diffuser portion which have been combined with each other are joined together.

According to such a method for producing the casing, the intake portion, the first main body portion, the diffuser portion, and the second main body portion are molded by integral molding of resin, and the casing is produced using the die slide molding. Therefore, since it is possible to produce the casing using one resin molding metal mold, it is possible to produce the casing with reduced production labor and manufacturing costs.

Further, in the impeller-side casing molding process, the diffuser portion and the second main body portion are integrally formed. Therefore, it is not necessary to perform an operation of assembling the diffuser portion in the second main body portion after molding, and the positional relationship between the diffuser portion and the second main body portion does not deviate from a predetermined positional relationship.

Further, since it is not necessary to perform post-processing or the like for adjusting the shape of the facing surface of the impeller to the diffuser portion in order to obtain a predetermined tip clearance, the production costs can be reduced.

Further, in the method for producing the casing for the radial compressor according to a second aspect of the present invention, the method for producing the casing according to the first aspect may further include an inserting process of inserting a sleeve made of a metal having a cylindrical shape into the resin molding metal mold used in the intake-side casing molding process before the intake-side casing molding process so as to be disposed at a position sandwiched between the diffuser portion and the intake portion in the direction of the rotational axis and to come into contact with the inner surface of the intake portion.

By executing the inserting process, it is possible to easily provide the metallic sleeve inside the intake portion. Since the metallic sleeve is provided by being inserted in the resin molding metal mold in advance, in a cooling process executed in the intake-side casing molding process, it is possible to curb deformation of the intake portion and the first main body portion due to shortage of resin. Therefore, it is possible to set the tip clearance with the impeller as the designed value, while eliminating the need for post-processing or the like to adjust the shape of the facing surface in the diffuser portion to the impeller.

Further, even if the impeller is damaged at the time of the operation of the radial compressor, it is possible to suppress the fragments of the impeller broken by the metallic sleeve from scattering to the outside of the compressor.

Further, in the method for producing the casing for the radial compressor according to a third aspect of the present invention, the method for producing the casing of the second aspect may further include a roughening process of roughening the contact surface of the sleeve coming into contact with the inner surface of the intake portion before the inserting process.

By performing such a roughening process, since the contact surface of the sleeve to the intake portion becomes a roughened surface, the sleeve can be firmly fixed to a predetermined position with respect to the intake portion.

In the method for producing the casing for the radial compressor according to a fourth aspect of the present invention, the method for producing the casing according to any one of the first to third aspects may further include a pin inserting process of inserting an ejector pin before resin injection in the impeller-side casing molding process into a hole portion to which the ejector pin for extracting a molded article provided in the resin molding metal mold used in the impeller-side casing molding process is inserted, to an intermediate position of the hole portion, before the impeller-side casing molding process.

By executing such a pin inserting process, at the time of molding the second main body portion and the diffuser portion which are a molded article, the resin enters the hole portion to the tip end of the ejector pin, and a columnar portion, which protrudes from the surface of the molded article integrally with the molded article and is inserted into the hole portion, is formed in the molded article. Thus, due to the columnar portion, it is possible to avoid positional deviation of the second main body portion and the diffuser portion which are the molded article from being deviated on the metal mold before the die sliding process is executed.

Further, in the method for producing the casing for the radial compressor according to a fifth aspect of the present invention, in the intake-side casing molding process and the impeller-side casing molding process according to any one of the first to fourth aspects, protruding portions which protrude in directions away from each other along the rotational axis may be formed on outer circumferential ends of each of the first main body portion and the second main body portion.

Since the first main body portion and the second main body portion have such protruding portions, when the first main body portion and the second main body portion try to shrink in the cooling process at the time of molding, the protruding portion is caught by the resin molding metal mold. Therefore, shrinkage of the first main body portion and the second main body portion in the radial direction is suppressed, and the casing can be produced with dimensions as designed. Therefore, the performance deterioration of the compressor can be suppressed.

A method for producing a radial compressor according to a sixth aspect of the present invention includes the method for producing the casing according to any one of first to fifth aspects; and an assembling process of providing an impeller and a rotary shaft to which the impeller is fitted in the casing.

According to such a method for producing a radial compressor, since the casing can be produced using one resin molding metal mold by executing the above-mentioned method for producing the casing, it is possible to reduce producing labor and to produce the casing, while suppressing the production costs.

Further, since the diffuser portion and the second main body portion are molded integrally, there is no need to perform an operation of assembling the diffuser portion to the second main body portion after molding, and the positional relationship between the diffuser portion and the second main body portion does not deviate from a predetermined positional relationship.

Further, since the positional deviation of the diffuser portion can be avoided, there is no need for post-processing or the like which adjusts the shape of the surface of the diffuser portion facing the impeller in order to obtain a predetermined tip clearance. Therefore, the production costs can be reduced.

### [Advantageous Effects of Invention]

In the method for producing the casing for the radial compressor and the method for producing the radial compressor, it is possible to avoid positional deviation of the diffuser portion and to suppress performance deterioration.

### [Brief Description of Drawings]

Fig. 1 is an overall top view of a radial compressor produced by a producing method according to an embodiment of the present invention.
Fig. 2 is an overall perspective view of the radial compressor produced by the producing method according to the embodiment of the present invention.
Fig. 3 is a longitudinal cross-sectional view of a casing for the radial compressor produced by the producing method according to the embodiment of the present invention.
Fig. 4 is a flowchart showing steps of the producing method according to the embodiment of the present invention.
Fig. 5 is a longitudinal cross-sectional view showing a state in which an intake-side casing molding process and an impeller-side casing molding process of the producing method according to the embodiment of the present invention are executed.
Fig. 6 is a longitudinal cross-sectional view showing a state in which a die sliding process of the producing method according to the embodiment of the present invention is executed.
Fig. 7 is a longitudinal cross-sectional view showing a state in which a secondary molding process of the producing method according to the embodiment of the present invention is executed.
Fig. 8 is an overall top view of a radial compressor produced by the producing method according to a first modified example of the embodiment of the present invention.
Fig. 9 is a longitudinal cross-sectional view showing a resin molding metal mold used in a producing method according to a second modified example of the embodiment of the present invention, and a molded article molded with the resin molding metal mold.
Fig. 10 is a flowchart showing processes of the producing method according to the second modified example of the embodiment of the present invention.

### [Description of Embodiments]

Hereinafter, a method for producing a radial compressor 1 according to an embodiment of the present invention will be described.

A radial compressor 1 (hereinafter simply referred to as a compressor 1) produced by the producing method of the embodiment is, for example, a compressor for a turbocharger mounted on a vehicle.

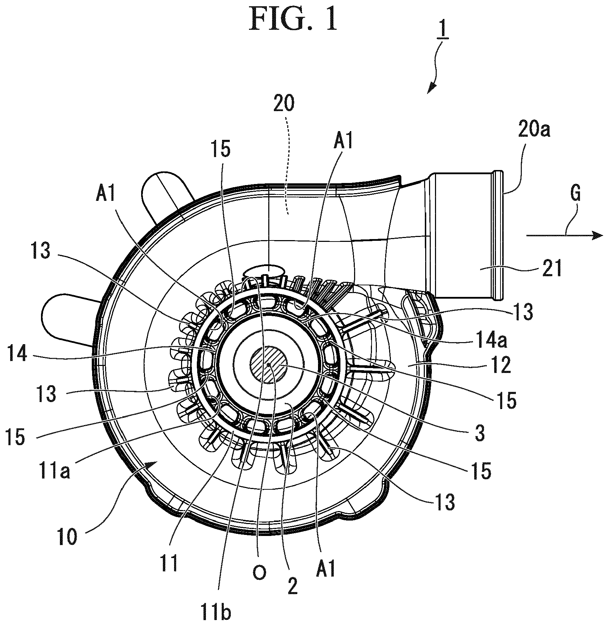

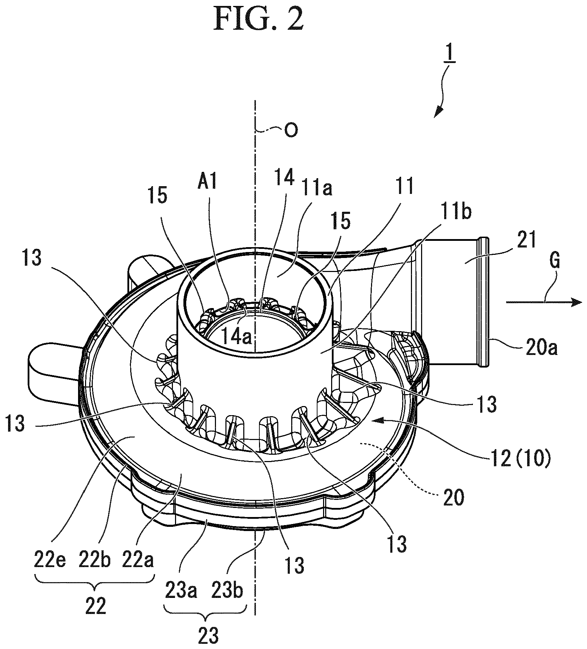

As shown in Figs. 1 and 2, the compressor 1 includes an impeller 2, a rotary shaft 3 that rotates about a rotational axis O integrally with the impeller 2 by fitting the impeller 2 thereto, and a casing 10 that covers the impeller 2.

Next, the casing 10 will be described.

As shown in Figs. 1 to 3, the casing 10 includes an intake portion 11 which introduces a gas G (for example, air) into the impeller 2, a scroll portion 12 including a resin material through which the gas G flowing out from the impeller 2 flows and from which the gas G is discharged, and a plurality of ribs 13 which connect together the intake portion 11 and the scroll portion 12. The casing 10 further includes an inner cylindrical portion 14 disposed inside the intake portion 11, and a plurality of inner ribs 15 which connect together the intake portion 11 and the inner cylindrical portion 14.

The intake portion 11 is disposed in one side in the direction of a rotational axis O with respect to the impeller 2, extends in the direction of the rotational axis O, and has a cylindrical shape which opens in the direction of the rotational axis O. The intake portion 11 suctions the gas G from one side in the direction of the rotational axis O toward the impeller 2 and introduces the gas G toward a flow path (not shown) of the impeller 2. Further, the material of the intake portion 11 is a resin such as a thermoplastic plastic (for example, PPS (polyphenylene sulfide), PPA (polyphthalamide), PA9T·PA46·PA6T (polyamide), PBT (polybutylene terephthalate) and the like).

The scroll portion 12 is disposed on the outer circumferential side of the impeller 2 and the intake portion 11. The scroll portion 12 has a scroll flow path 20 that extends annularly in the circumferential direction of the impeller 2 and the rotary shaft 3 therein. The scroll portion 12 further has a cylindrical discharge port 21 which is provided at one end portion in the circumferential direction and forms an opening portion 20a of the scroll flow path 20.

Here, an end portion of the scroll portion 12 on one side in the circumferential direction which is the discharge port 21 side is defined as a discharge side of the scroll portion 12, and an end portion on the other side in the circumferential direction is defined as a winding start side of the scroll portion 12. The end portion on the discharge side and the end portion on the winding start side are adjacent to each other.

In the scroll flow path 20, a flow path cross-sectional area in a cross-section orthogonal to the circumferential direction gradually increases from the winding start side to the discharge side. As a result, the external shape dimension of the scroll portion 12 gradually increases from the winding start side to the discharge side. Further, the shape of the flow path cross-section in a cross-section orthogonal to the circumferential direction of the scroll flow path 20 is circular. Thus, the external shape of the surface of the scroll portion 12 facing the direction of the rotational axis O is formed in a curved shape along the shape of the scroll flow path 20.

Further, the scroll portion 12 includes a first main body portion 22 which forms an inner surface of the scroll flow path 20 at one side of the rotational axis O, a second main body portion 23 which forms an inner surface of the scroll flow path 20 at the other side of the rotational axis O, a diffuser portion 24 which forms an inner surface of the scroll flow path 20 on the inner side in the radial direction, and a sleeve 25 disposed between the diffuser portion 24 and the intake portion 11.

The first main body portion 22 has an annular shape with the rotational axis O as a center. The first main body portion 22, which is a portion of the scroll portion 12 on one side in the direction of the rotational axis O, is provided to surround the outer circumferential surface 11b of the intake portion 11 from the outer circumference. Further, the first main body portion 22 is made of resin similarly to the intake portion 11. The discharge port 21 is connected to the end portion of the first main body portion 22 on one side in the circumferential direction. In the embodiment, the first main body portion 22 and the discharge port 21 are integrally produced.

Specifically, the first main body portion 22 has an annular portion 22a which has an annular shape with the rotational axis O as the center, and a protruding portion 22b which protrudes in the circumferential direction along the rotational axis O to one side in the direction of the rotational axis O, over the circumferential direction at an outer end portion (an outer circumferential end) in the radial direction of the annular portion 22a. Further, the first main body portion 22 further has a surface 22c which is provided at the outer end portion (the outer circumferential end) in the radial direction of the annular portion 22a and faces the other side in the direction of the rotational axis O, and a recessed portion 22d which is recessed from the surface 22c to one side of the direction of the rotational axis O over the circumferential direction.

The second main body portion 23 has an annular portion 23a which has an annular shape with the rotational axis O as the center, and a protruding portion 23b which protrudes to the other side in the direction of the rotational axis O along the rotational axis O, over the circumferential direction at the outer end portion (the outer circumferential end) of the annular portion 23a in the radial direction. Further, the second main body portion 23 has a surface 23c which is provided at the outer end portion (the outer circumferential end) in the radial direction and faces one side in the direction of the rotational axis O, and a recessed portion 23d which is recessed in the circumferential direction from the surface 23c to the other side in the direction of the rotational axis O.

The protruding portion 23b has substantially the same shape as the protruding portion 22b of the first main body portion 22, and the protruding portions 22b and 23b are disposed at the same position in the radial direction. The protruding portion 23b and the protruding portion 22b extend in directions away from each other in the direction of the rotational axis O.

The recessed portion 23d has substantially the same shape as the recessed portion 22d in the first main body portion 22.

In addition, the second main body portion 23 is made of resin similarly to the intake portion 11 and the first main body portion 22. The second main body portion 23 is provided to face the first main body portion 22 in the direction of the rotational axis O. In the present embodiment, the second main body portion 23 is produced separately from the first main body portion 22 and joined to the first main body portion 22. More specifically, the surface 23c of the second main body portion 23 and the surface 22c of the first main body portion 22 are in contact with each other, and the recessed portion 23d of the second main body portion 23 and the recessed portion 22d of the first main body portion 22 are disposed at the same position in the radial direction, and the recessed portion 23d and the recessed portion 22d face each other in the direction of the rotational axis O.

The diffuser portion 24 has an annular shape with the rotational axis O as a center. The diffuser portion 24 is disposed at a position on a radially inner side of the second main body portion 23 and sandwiched between the intake portion 11 and the impeller 2 in the direction of the rotational axis O.

A facing surface 24a of the diffuser portion 24 facing the impeller 2 is formed in a shape corresponding to a shape of a tip of the impeller 2. The distance between the facing surface 24a and the impeller 2 is the tip clearance.

Further, the other end portion of the second main body portion 23 in the direction of the rotational axis O is located on the other side of the rotational axis O than the facing surface 24a of the diffuser portion 24. As a result, the scroll flow path 20 has an opening portion 20b which opens annularly inward in the radial direction. The gas G flowing out from the impeller 2 flows into the scroll flow path 20 from the opening portion 20b.

The diffuser portion 24 is produced separately from the first main body portion 22, and is joined to the first main body portion 22 from the other side in the direction of the rotational axis O.

The sleeve 25 is disposed at a position sandwiched between the diffuser portion 24 and the intake portion 11 in the direction of the rotational axis O. The sleeve 25 is made of metal. The sleeve 25 is provided with a cylindrical portion 26 extending in the direction of the rotational axis O, and a flange portion 27 provided integrally with the cylindrical portion 26 at the other end portion of the cylindrical portion 26 in the direction of the rotational axis O.

The cylindrical portion 26 has a cylindrical shape centered on the rotational axis O. The outer circumferential surface of the cylindrical portion 26 is a contact surface 26a that is in contact with the inner circumferential surface 11a of the intake portion 11. The contact surface 26a is roughened by performing a roughening treatment such as laser. Further, the inner circumferential surface 25a of the sleeve 25 is flush with the inner circumferential surface 11a of the intake portion 11 so that no step is formed between the inner circumferential surface 25a and the inner circumferential surface 11a of the intake portion 11.

The flange portion 27 has an annular shape with the rotational axis O as a center. The flange portion 27 is provided to protrude radially outward from the outer circumferential surface of the cylindrical portion 26.

Here, in a region which is located on the radially inner side of the first main body portion 22 and sandwiched between the first main body portion 22 and the diffuser portion 24, an annular gap A2 centered on the rotational axis O is provided. The flange portion 27 is disposed in the gap A2. Further, a surface of the flange portion 27 facing one side in the direction of the rotational axis O is a contact surface 27a which is in contact with the first main body portion 22. The contact surface 27a may also be a roughened surface. Further, a surface of the flange portion 27 facing the other side in the direction of the rotational axis O is disposed at a position separated from the diffuser portion 24 in the direction of the rotational axis O.

The scroll portion 12 of this embodiment further includes a filling material 30 filled in the gap A2. The filling material 30 is the same resin as the materials of the first main body portion 22, the second main body portion 23, and the diffuser portion 24. Due to the filling material 30, the first main body portion 22 and the diffuser portion 24 are joined to each other.

In addition, the filling material 30 is filled also in a circumferentially extending gap A3 formed by the recessed portion 22d and the recessed portion 23d, and the first main body portion 22 and the second main body portion 23 are joined to each other.

The plurality of ribs 13 connect together the outer circumferential surface 11b of the intake portion 11 and an outer surface 22e of the first main body portion 22 facing one side in the direction of the rotational axis O. The ribs 13 are made of resin similarly to the intake portion 11 and the first main body portion 22, and are formed, for example, integrally with the intake portion 11 and the first main body portion 22.

The ribs 13 are provided in the circumferential direction of the scroll portion 12 at intervals in the circumferential direction. The installation interval of the ribs 13 in the circumferential direction gradually decreases from the winding start side to the discharge side. The ribs 13 extend in the radial direction on the outer surface 22e of the first main body portion 22 and are connected to the outer surface 22e throughout the entire region in the extending direction of the rib 13 in the radial direction.

Further, the radial length of the rib 13 on the outer surface 22e of the first main body portion 22 gradually decreases from the winding start side to the discharge side in the circumferential direction.

Further, the ribs 13 extend in the direction of the rotational axis O along the outer circumferential surface 11b of the intake portion 11 and are connected to the outer circumferential surface 11b of the intake portion 11 in the entire region in the extending direction of the ribs 13 in the direction of the rotational axis O. The length dimensions of all the ribs 13 on the outer circumferential surface 11b of the intake portion 11 are the same.

The inner cylindrical portion 14 has a cylindrical shape centered on the rotational axis O, and the gas G flows through the inner side of the inner cylindrical portion 14. The end portion of the inner cylindrical portion 14 on one side in the direction of the rotational axis O is located on the other side in the direction of the rotational axis O than the end portion of the intake portion 11 on one side in the direction of the rotational axis O. That is, the inner cylindrical portion 14 is accommodated in the intake portion 11. The inner cylindrical portion 14 is made of a resin similarly to the intake portion 11. For example, the inner cylindrical portion 14 is integrally formed with the intake portion 11, the first main body portion 22, and the rib 13. That is, the intake portion 11 has a double pipe structure by the inner cylindrical portion 14.

In the present embodiment, the outer circumferential surface 14a of the inner cylindrical portion 14 is disposed at a position away from the inner circumferential surface 11a of the intake portion 11 in the radial direction. Further, an end portion of the inner cylindrical portion 14 on the other side in the direction of the rotational axis O is provided at an interval from an end portion of the diffuser portion 24 on one side in the direction of the rotational axis O. As a result, an annular slit SL centered on the rotational axis O is formed between the inner cylindrical portion 14 and the diffuser portion 24.

The inner rib 15 is provided between the outer circumferential surface 14a of the inner cylindrical portion 14 and the inner circumferential surface 11a of the intake portion 11 to extend in the direction of the rotational axis O. Also, a plurality of inner ribs 15 are provided at equal intervals in the circumferential direction.

As a result, spaces A1 communicating with the inner side of the inner cylindrical portion 14 are defined on both sides in the direction of the rotational axis O between the respective inner ribs 15. The spaces A1 communicate with the inner side of the inner cylindrical portion 14 via the slit SL on the other side of the rotational axis O. Also, the spaces A1 also open in the direction of the rotational axis O on the one side of the rotational axis O and communicate with the inner side of the inner cylindrical portion 14.

In the present embodiment, since the scroll portion 12 includes the sleeve 25, the portion of the inner rib 15 on the other side in the direction of the rotational axis O is connected to the inner circumferential surface 25a of the sleeve 25, and the portion of the inner rib 15 on one side in the direction of the rotational axis O is connected to the inner circumferential surface 11a of the intake portion 11.

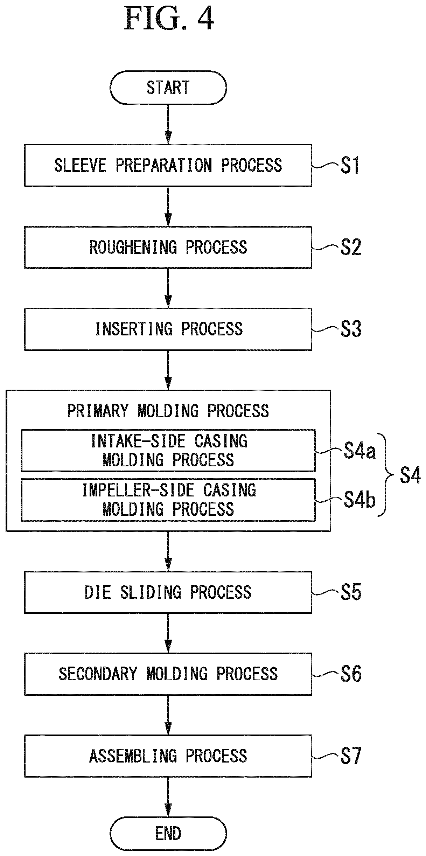

Next, a method for producing the compressor 1 of the present embodiment will be described with reference to Figs. 4 to 7. The producing method of the present embodiment includes a method for producing the casing 10 including a sleeve preparation process Si, a roughening process S2, an inserting process S3, a primary molding process S4, a die sliding process S5, and a secondary molding process (bonding process) S6, and an assembling process S7 which is executed after the method of producing the casing 10.

First, a sleeve preparation process Si is executed to prepare the metallic sleeve 25. Thereafter, the roughening process S2 is performed, and the contact surface 26a of the sleeve 25 is, for example, irradiated with laser beam to roughen the contact surface 26a.

Next, the inserting process S3 is executed. In the inserting process S3, the sleeve 25 is inserted and installed at a predetermined position inside the resin molding metal mold 100 for molding the first main body portion 22 and the intake portion 11.

Here, the resin molding metal mold 100 has a first metal mold 110 and a second metal mold 111 abuts the first metal mold 110. The sleeve 25 is inserted into the first metal mold 110 side.

Thereafter, the primary molding process S4 is executed. The primary molding process S4 includes an intake-side casing molding process S4a and an impeller-side casing molding process S4b.

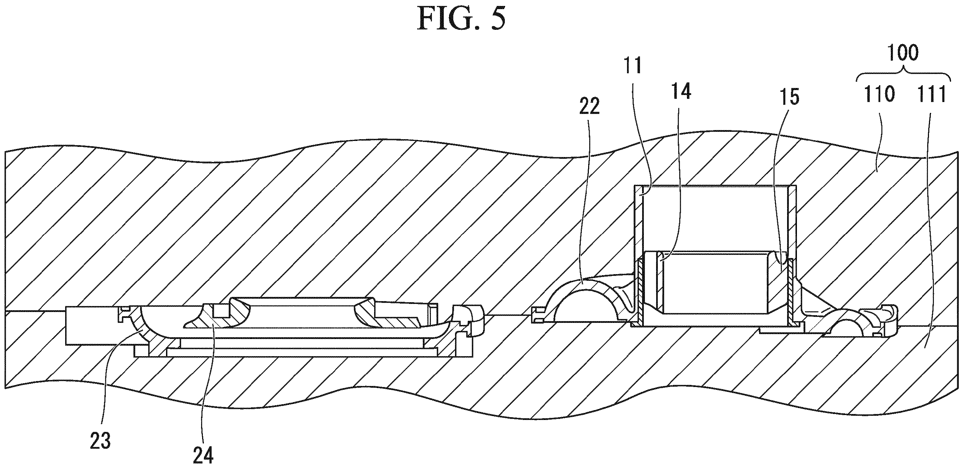

As shown in Fig. 5, in the intake-side casing molding process S4a, resin is injected into the resin-molding metal mold 100 on which the sleeve 25 is installed, and the first main body portion 22 and the intake portion 11 are integrally formed. As a result, the metallic sleeve 25, the first main body portion 22, and the intake portion 11 are integrally molded. In the present embodiment, the inner cylindrical portion 14 and the inner rib 15 are also resin-molded integrally with the first main body portion 22 and the intake portion 11.

Further, the impeller-side casing molding process S4b is executed together with the intake-side casing molding process S4a. In the resin molding metal mold 100, a portion integrally forming the first main body portion 22 and the intake portion 11, and a portion integrally molding the second main body portion 23 and the diffuser portion 24 are provided side by side.

In the impeller-side casing molding process S4b, resin is injected into the resin molding metal mold 100, and the second main body portion 23 and the diffuser portion 24 are integrally formed.

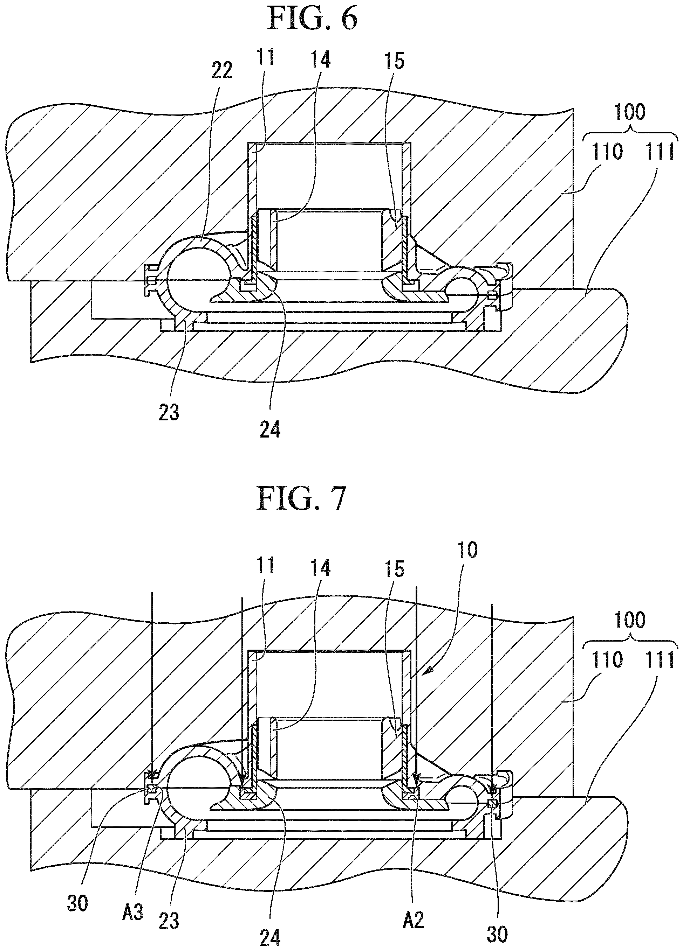

Next, the die sliding process S5 is executed. As shown in Fig. 6, the first metal mold 110 and the second metal mold 111 in the resin molding metal mold 100 are cause to slide. As a result, the integrally molded intake portion 11 and the first main body portion 22 disposed on the first metal mold 110 are caused to face the second main body portion 23 and the diffuser portion 24 disposed on the second metal mold 111.

Next, the secondary molding process S6 is executed. That is, as shown in Fig. 7, by disposing the first main body portion 22 disposed on the first metal mold 110 and the second main body portion 23 disposed on the second metal mold 111 to face each other, a gap A3 formed between the first main body portion 22 and the second main body portion 23 and a gap A2 formed between the first main body portion 22 and the diffuser portion 24 are filled with resin (the filling material 30), thereby joining the first main body portion 22 and the second main body portion 23.

Therefore, the casing 10 is produced. Here, an inspection process may be executed after the secondary molding process S6 is executed.

Further, the assembling process S7 is executed, and the impeller 2 and the rotary shaft 3 to which the impeller 2 is fitted are provided in the casing 10 such that the tip of the impeller 2 faces the facing surface 24a of the diffuser portion 24 and the center of the rotary shaft 3 coincides with the rotational axis O (see Fig. 1).

According to the method for producing the compressor 1 of the present embodiment described above, the intake portion 11 and the first main body portion 22 can be molded using one resin molding metal mold 100, and simultaneously the diffuser portion 24 and the second main body portion 23 can be molded. Thereafter, by causing the first metal mold 110 and the second metal mold 111 of the resin molding metal mold 100 to slide, it is possible to join the molded articles to each other. That is, the casing 10 can be produced by so-called die slide molding. Therefore, since it is possible to reduce the labor for producing and to reduce the number of resin molding metal molds, it is possible to produce the casing, while suppressing the production costs.

Further, in the impeller-side casing molding process S4b, the diffuser portion 24 and the second main body portion 23 are integrally formed. Therefore, it is not necessary to install the diffuser portion 24 in the second main body portion 23 after molding, and the positional relationship between the diffuser portion 24 and the second main body portion 23 does not deviate from a predetermined positional relationship. That is, it is possible to prevent the axis of the diffuser portion 24 from deviating from the rotational axis O. As a result, for example, there is no need for post-processing or the like which adjusts the shape of the facing surface 24a of the diffuser portion 24 to obtain a predetermined tip clearance.

Therefore, in this embodiment, as described above, it is possible to avoid the positional deviation of the diffuser portion 24, while reducing the production costs of the casing 10, and to suppress the performance deterioration.

Further, by executing the inserting process S3, it is possible to easily provide the metallic sleeve 25 inside the intake portion 11. Since the metallic sleeve 25 is provided by being inserted in the resin molding metal mold 100 before the primary molding process S4, in the cooling process executed in the intake-side casing molding process S4a, it is possible to suppress deformation of the intake portion 11 and the first main body portion 22 due to shrinkage of resin. Therefore, since the positional deviation of the diffuser portion 24 does not occur by the shrinkage deformation of resin, it is not necessary to perform post-processing or the like on the facing surface 24a, and the tip clearance with the impeller 2 can be set to a designed value.

Furthermore, by providing the metallic sleeve 25, if the impeller 2 breaks at the time of operation of the radial compressor 1, it is possible to prevent the fragments of the impeller 2 broken by the sleeve 25 from scattering to the outside of the compressor 1.

Further, since the contact surface 26a of the sleeve 25 is roughened by the roughening process S2, the sleeve 25 can be firmly fixed to a predetermined position with respect to the intake portion 11. In particular, it is difficult for positional deviation of the sleeve 25 to occur even during operation of the compressor 1. Therefore, the performance deterioration of the compressor 1 can be suppressed.

Further, since the first main body portion 22 has the protruding portion 22b and the second main body portion 23 has the protruding portion 23b, when the first main body portion 22 and the second main body portion 23 try to shrink in the cooling process when executing the intake-side casing molding process S4a and the impeller-side casing molding process S4b, the protruding portion 23b is caught by the resin molding metal mold 100. Therefore, shrinkage of the first main body portion 22 and the second main body portion 23 in the radial direction is suppressed, and the casing 10 can be produced with dimensions as designed. Therefore, the performance deterioration of the compressor 1 can be suppressed.

In addition, by providing the plurality of ribs 13 in the casing 10, it is possible to improve the rigidity in a portion in which the intake portion 11 and the scroll portion 12 are connected together, and thermal deformation of the scroll portion 12 can be suppressed. As a result, it is possible to suppress fluctuation of the tip clearance between the impeller 2 and the facing surface 24a of the diffuser portion 24, and the performance deterioration of the compressor 1 can be suppressed.

Further, in the scroll portion 12, since the outer shape dimension of the discharge side is larger than that of the winding start side, with thermal deformation with the same coefficient of thermal expansion, the amount of thermal deformation on the discharge side becomes larger than on the winding start side. In this embodiment, by reducing the installation interval of the ribs 13 toward the discharge side, thermal deformation in the direction of the rotational axis O can be suppressed, while promoting thermal deformation of the scroll portion 12 in the radial direction on the discharge side. On the other hand, since the radial dimension of the rib 13 on the outer surface 22e of the first main body portion 22 of the scroll portion 12 is larger on the winding start side, the rigidity of the scroll portion 12 becomes higher on the winding start side than on the discharge side. Therefore, relatively uniform thermal deformation occurs in the scroll portion 12 in the direction of the rotational axis O and in the radial direction.

As a result, the amount of thermal deformation amount in the direction of the rotational axis O can be made equal on the discharge side in which the amount of thermal deformation in the direction of the rotational axis O is larger than the winding start side, and on the winding start side in which the amount of thermal deformation in the direction of the rotational axis O is smaller than the discharge side. That is, a change in tip clearance between the impeller 2 and the casing 10 can be reduced on the discharge side. Therefore, the tip clearance between the impeller 2 and the casing 10 can be made uniform in the circumferential direction. Therefore, it is possible to suppress performance deterioration of the compressor 1.

Although the embodiments of the present invention have been described above in detail with reference to the drawings, the respective configurations and combinations thereof in the respective embodiments are merely examples, and additions, omissions, substitutions and other changes of configurations can be within the scope that does not depart from the gist of the present invention. Further, the present invention is not limited by the embodiments, but is limited only by the scope of the claims.

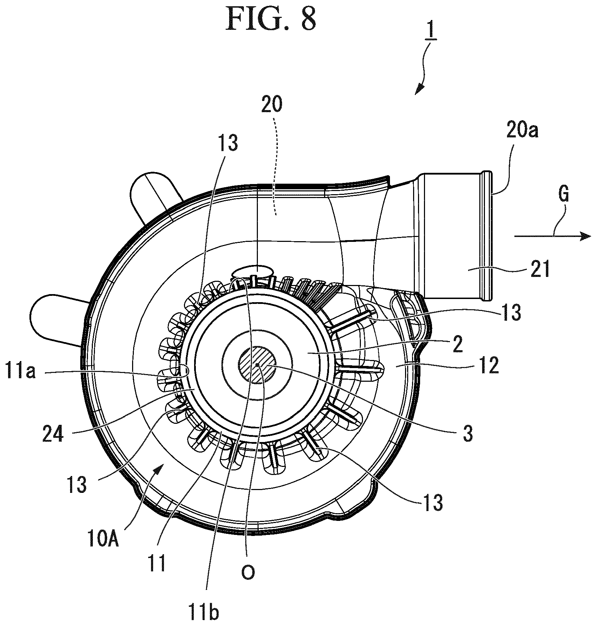

For example, as shown in Fig. 8, the casing 10A may not have the inner cylindrical portion 14 and the inner rib 15. That is, the intake portion 11 may not have a double pipe structure.

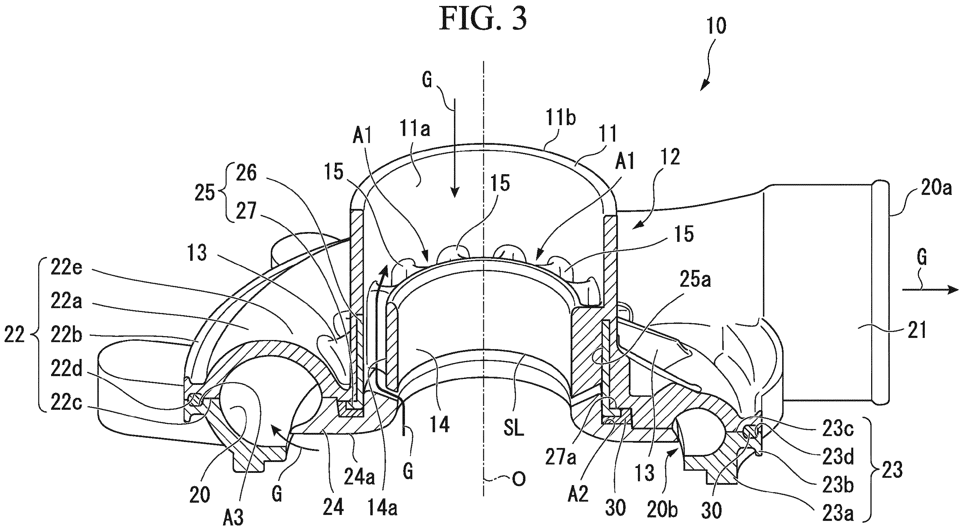

Further, only the inner cylindrical portion 14 may be provided inside the intake portion 11, and the inner rib 15 may not be provided. That is, the space A1 which is the recirculation path of the gas G (see Fig. 3) may not be formed.

Further, the inserting process S3 is not executed and the sleeve 25 may not be provided in the scroll portion 12. Also, the roughening process S2 may not be executed.

Further, the sleeve 25 may not be provided with the flange portion 27. Further, the contact surface 26a of the sleeve 25 does not necessarily need to be a rough surface.

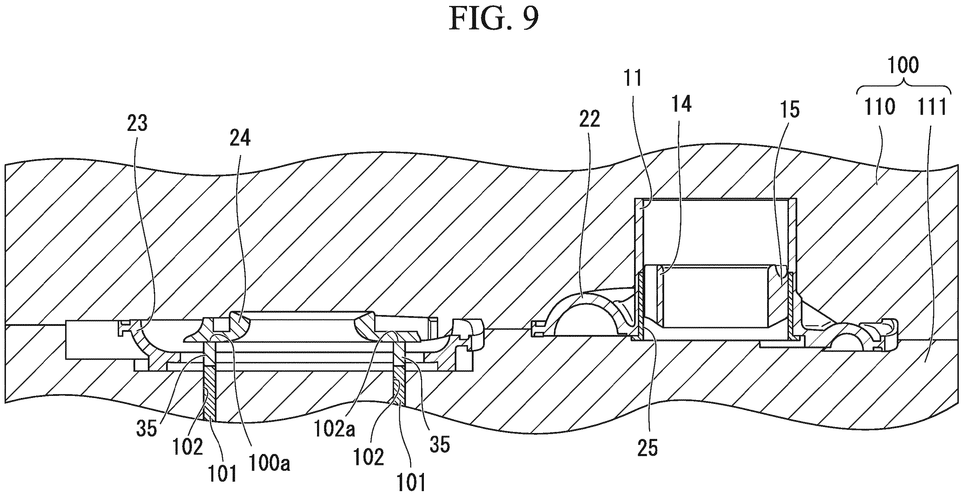

Here, as shown in Fig. 9, the resin molding metal mold 100 may be provided with a hole portion 102 into which an ejector pin 101 for extracting the diffuser portion 24 which is a molded article is inserted.

Specifically, in the present embodiment, the hole portion 102 is provided to penetrate the second metal mold 111 in the direction of the rotational axis O so as to extend from the inner surface 100a of the second metal mold 111 in the resin molding metal mold 100 for forming the facing surface 24a of the diffuser portion 24 which is a molded article, in the direction of the rotational axis O. Further, a pair of the hole portions 102 are provided apart from each other in the radial direction. The opening portion 102a of the hole portion 102 is provided at a position corresponding to the position on the inner surface 100a for forming the facing surface 24a and closer to the end portion on the radially outer side of the facing surface 24a.

Here, even at a position at which the first main body portion 22 and the second main body portion 23 are molded, the hole portion may be provided in the resin molding metal mold 100.

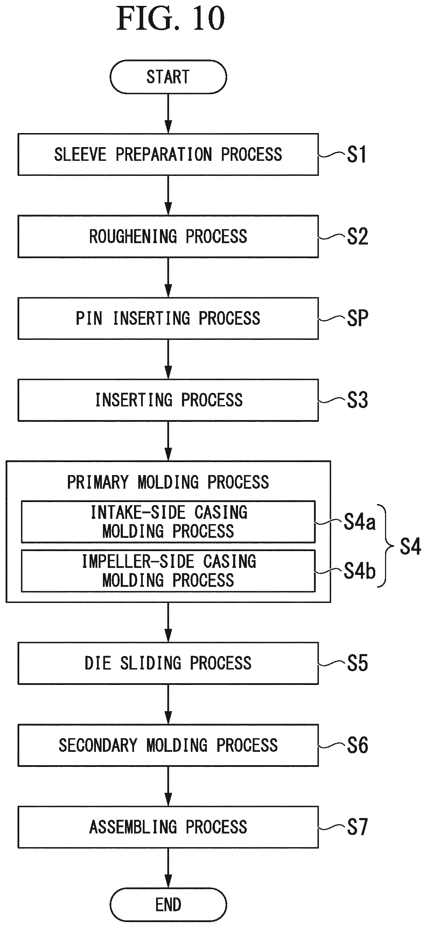

Further, as shown in Fig. 10, in the modified example, the pin inserting process SP may be executed before the primary molding process S4. In the pin inserting process SP, the ejector pin 101 is inserted to an intermediate position away from the opening portion 102a of the hole portion 102, that is, to a position at which the ejector pin 101 does not come into contact with the diffuser portion 24 which is a molded article, from the outside of the resin molding metal mold 100 before injection of resin into the resin molding metal mold 100.

Here, in this modified example, the pin inserting process SP is executed between the roughening process S2 and the inserting process S3. However, as long as it is at least before the primary molding process S4, the pin inserting process SP may be executed at any time.

By executing such a pin inserting process SP, at the time of molding the diffuser portion 24 which is a molded article, the resin enters the hole portion 102 between the diffuser portion 24 and the tip end of the ejector pin 101 to form a pillar-shaped columnar portion 35 protruding from the diffuser portion 24 and inserted into the hole portion 102 integrally with the diffuser portion 24 which is a molded article. By the columnar portion 35, it is possible to avoid the positional deviation of the diffuser portion 24 on the second metal mold 111 before execution of the die sliding process S5.

Further, it is not necessarily need to form the protruding portions 22b and 23b on the first main body portion 22 and the second main body portion 23. Further, the rib 13 may not be provided.

### [Industrial Applicability]

According to the method for producing the casing for the radial compressor and the method for producing the radial compressor, it is possible to avoid positional deviation of the diffuser portion and to suppress performance deterioration.

### [Reference Signs List]

1 Radial compressor
2 Impeller
3 Rotational axis
10, 10A Casing
11 Intake portion
11a Inner circumferential surface
11b Outer circumferential surface
12 Scroll portion
13 Rib
14 Inner cylindrical portion
14a Outer circumferential surface
15 Inner rib
20 Scroll flow path
20a Opening portion
20b Opening portion
21 Discharge port
22 First main body portion
22a Annular portion
22b Protruding portion
22c Surface
22d Recessed portion
22e Outer surface
23 Second main body portion
23a Annular portion
23b Protruding portion
23c Surface
23d Recessed portion
24 Diffuser portion
24a Facing surface
25 Sleeve
25a Inner circumferential surface
26 Cylindrical portion
26a Contact surface
27 Flange portion
27a Contact surface
30 Filling material
35 Columnar portion
100 Resin molding metal mold
100a Inner surface
101 Ejector pin
102 Hole portion
102a Opening
110 First metal mold
111 Second metal mold
A1 Space
A2 Gap
A3 Gap
SL Slit
O Rotational axis
G Gas
S1 Sleeve preparation process
S2 roughening process
S3 Inserting process
S4 Primary molding process
S4a Intake-side casing molding process
S4b Impeller-side casing molding process
S5 Die sliding process
S6 Secondary molding process (joining process)
S7 Assembling process
SP Pin inserting process

## Claims

1. A method for producing a casing for a radial compressor, the method comprising:
an intake-side casing molding process of molding an intake portion and a first main body portion by integral molding of resin, the intake portion having a cylindrical shape extending in a direction of a rotational axis of an impeller and opening in the direction of the rotational axis to introduce gas into the impeller, the first main body portion having a discharge port which is disposed on an outer circumferential side of the impeller and the intake portion, extends along the circumferential direction and opens in the circumferential direction; and an inner surface on the intake portion side in the direction of the rotational axis of a scroll flow path through which the gas flows from the impeller toward the discharge port;
an impeller-side casing molding process of molding a second main body portion and a diffuser portion with integral molding of resin by a resin molding metal mold used in the intake-side casing molding process, the second main body portion having an inner surface on the impeller side in the direction of the rotational axis in the scroll flow path, the diffuser portion being disposed at a position on a radially inner side of the second main body portion and sandwiched between the intake portion and the impeller in the direction of the rotational axis, having an inner surface on a radially inner side of the scroll flow path and guiding the gas from the impeller into the scroll flow path;
a die sliding process of combining the intake portion and the first main body portion which have been integrally molded, and the second main body portion and the diffuser portion which have been integrally molded, by slide of the resin molding metal mold; and
a joining process of joining the intake portion and the first main body portion, and the second main body portion and the diffuser portion combined with each other.

2. The method for producing the casing for the radial compressor according to claim 1, further comprising:
an inserting process of inserting a sleeve made of a metal and having a cylindrical shape into the resin molding metal mold used in the intake-side casing molding process before the intake-side casing molding process so as to be disposed at a position sandwiched between the diffuser portion and the intake portion in the direction of the rotational axis and to come into contact with the inner surface of the intake portion.

3. The method for producing the casing for the radial compressor according to claim 2, further comprising:
a roughening process of roughening the contact surface of the sleeve coming into contact with the inner surface of the intake portion before the inserting process.

4. The method for producing the casing for the radial compressor according to any one of claims 1 to 3, further comprising:
a pin inserting process of inserting an ejector pin before resin injection in the impeller-side casing molding process into a hole portion to which the ejector pin for extracting a molded article provided in the resin molding metal mold used in the impeller-side casing molding process is inserted, to an intermediate position of the hole portion, before the impeller-side casing molding process.

5. The method for producing the casing for the radial compressor according to any one of claims 1 to 4, wherein in the intake-side casing molding process and the impeller-side casing molding process, protruding portions which protrude in directions away from each other along the rotational axis are formed on outer circumferential ends of each of the first main body portion and the second main body portion.

6. A method for producing a radial compressor, the method comprising:
the method for producing the casing according to any one of claims 1 to 5; and
an assembling process of providing an impeller and a rotary shaft to which the impeller is fitted in the casing.
